# EUROPÄISCHE PATENTSCHRIFT

(11) **EP 0 933 136 B1**
(45) Veröffentlichungstag und Bekanntmachung des Hinweises auf die Patenterteilung: **02.01.2004**
(21) Anmeldenummer: 99100996.0
(22) Anmeldetag: 21.01.1999
(51) Int. Cl.: B05B 1/16, B05B 1/18, F16K 31/60, F16K 11/044

(54) **Wasserausflussarmatur**
Valve for a water discharge nozzle
Soupape pour un buse de décharge d'eau

(30) Priorität: 30.01.1998 DE 19803554
(43) Veröffentlichungstag der Anmeldung: 04.08.1999
(73) Patentinhaber: Grohe Water Technology AG & Co. KG, 58675 Hemer (DE)
(72) Erfinder: Humpert, Jürgen, 58675 Hemer (DE); Heimann, Bruno, 58730 Fröndenberg (DE); Gransow, Eckhard, 58730 Fröndenberg (DE); Dickel, Harald, 58644 Iserlohn (DE)

(56) Entgegenhaltungen:
- EP-A- 0 659 490
- US-A- 5 100 055
- US-A- 5 145 114

## Beschreibung

Die Erfindung betrifft eine Wasserausflußarmatur mit einer Verbindungsleitung, insbesondere eine in einem Rohrbogen verschiebbar geführte Schlauchleitung, zu einem Misch- und/oder Absperrventil sowie mit verschiedenen Wasserstrahlbildnern, wobei mit einem von einem Betätigungsglied stellbaren Umschaltventil wahlweise einem Wasserauslaßmundstück oder Brausestrahlbildnern Druckwasser zuführbar ist.

Eine derartige Wasserausflußarmatur war aus den Druckschriften US-A-5 145 114 und DE 33 06 947 A1 sowie DE 195 27 232 A1 vorbekannt. Hierbei erfolgt die Umstellung der Wasserausflußarmatur auf unterschiedliche Strahlbildner mit einem Schieber, der außerhalb des eigentlichen Handgriffs angeordnet oder mit einer Hand in der herausgezogenen Stellung kaum zu bedienen ist.

Der Erfindung liegt die Aufgabe zugrunde, die im Oberbegriff des Anspruchs 1 angegebene Wasserausflußarmatur zu verbessern, und insbesondere die Handhabbarkeit sowie die Umschaltmöglichkeit zu optimieren.

Diese Aufgabe wird erfindungsgemäß dadurch gelöst, daß als Betätigungsglied ein Hebel vorgesehen ist, der mit einem Endbereich aus einem stromaufwärts vor dem Wasserauslaßmundstück angeordneten Ventilglied des Umschaltventils verbunden und außerdem mit einer Drehachse an einem Gehäuseteil gelagert ist, wobei ein Bereich des Hebels aus einem die Wasserausflußarmatur umgebenden Gehäuse als Betätigungsgriff vorsteht und das Gehäuse mit dem Betätigungsgriff im Querschnitt so dimensioniert ist, daß es vom Benutzer mit einer Hand umfaßbar ist.
Weitere Ausgestaltungen der Erfindung sind in den Ansprüchen 2 bis 17 angegeben.

Ausführungsbeispiele der Erfindung sind in der Zeichnung dargestellt und werden im folgenden näher beschrieben. Es zeigt
- Fig. 1: eine Wasserausflußarmatur an einem Rohrbogen eines an einem Spülbecken installierten Wassermisch- und Absperrventils in Seitenansicht;
- Fig. 2: die in Fig. 1 gezeigte Wasserausflußarmatur in vergrößerter Darstellung im Längsschnitt;
- Fig. 3: eine in Fig. 2 gezeigte Bodenplatte mit Zuflußrohr im Längsschnitt;
- Fig. 4: die in Fig. 3 gezeigte Bodenplatte in Unteransicht;
- Fig. 5: die in Fig. 3 gezeigte Bodenplatte in der Schnittebene V;
- Fig. 6: ein in Fig. 2 gezeigtes Gehäuse des Umschaltventils im Längsschnitt;
- Fig. 7: das in Fig. 6 gezeigte Gehäuse in Draufsicht;
- Fig. 8: das in Fig. 6 gezeigte Gehäuse um 90° gedreht im Längsschnitt;
- Fig. 9: einen in Fig. 2 gezeigten Hebel in Seitenansicht;
- Fig. 10: den in Fig. 9 gezeigten Hebel in Draufsicht;
- Fig. 11: eine in Fig. 2 gezeigte Membran im Längsschnitt;
- Fig. 12: die in Fig. 11 gezeigte Membran um 90° gedreht in Seitenansicht;
- Fig. 13: ein anderes Ausführungsbeispiel einer Wasserausflußarmatur.

Der Einfachheit halber sind bei den Ausführungsbeispielen in der Zeichnung gleiche oder entsprechende Elemente mit jeweils gleichen Bezugszeichen versehen.

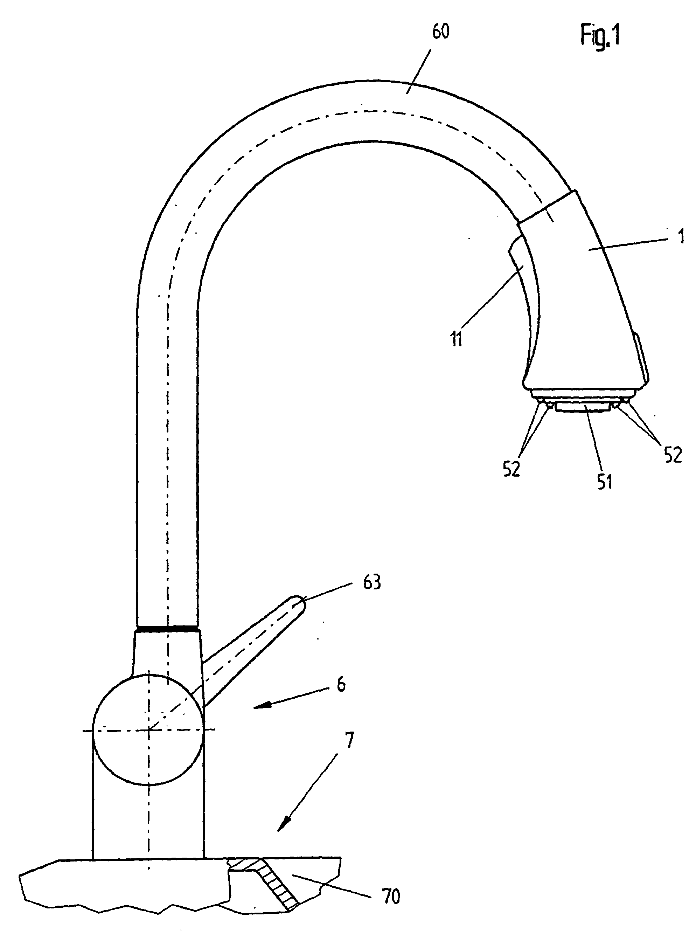

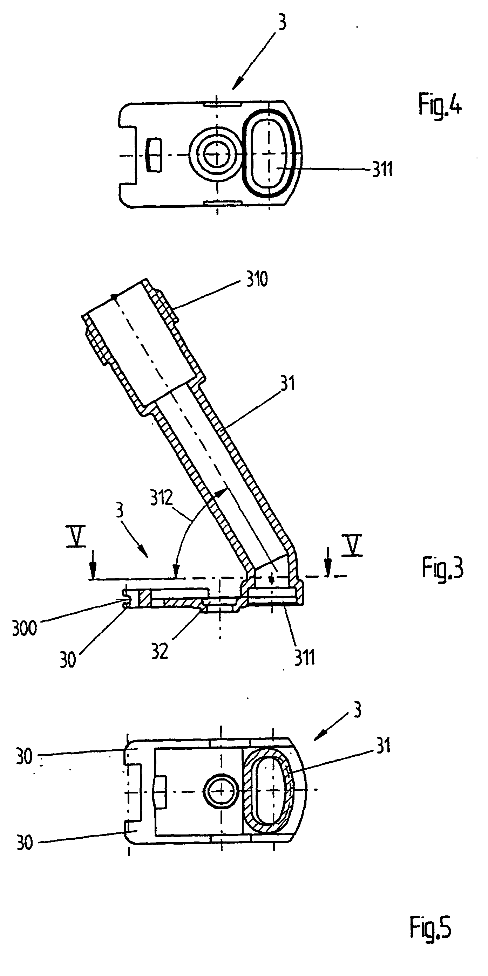

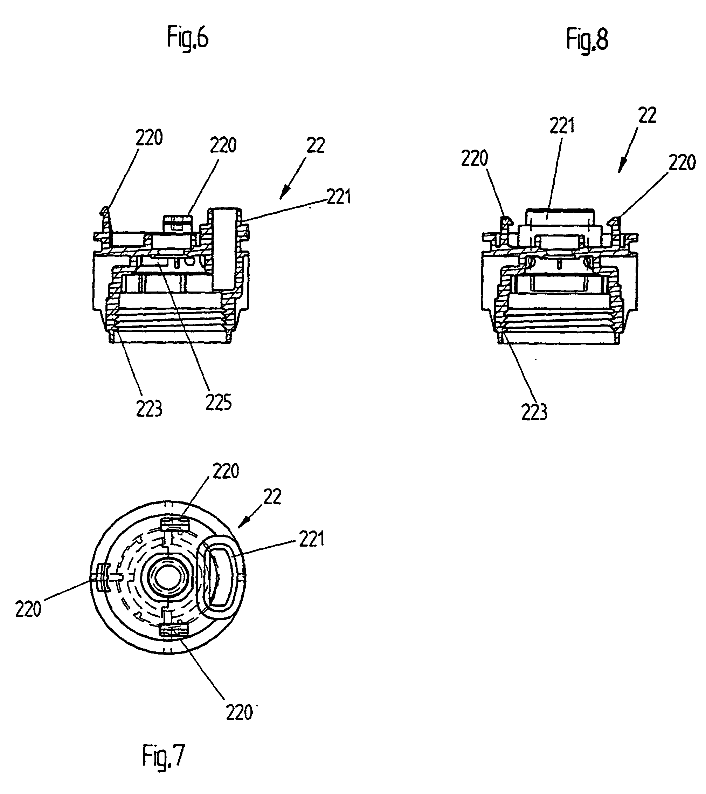

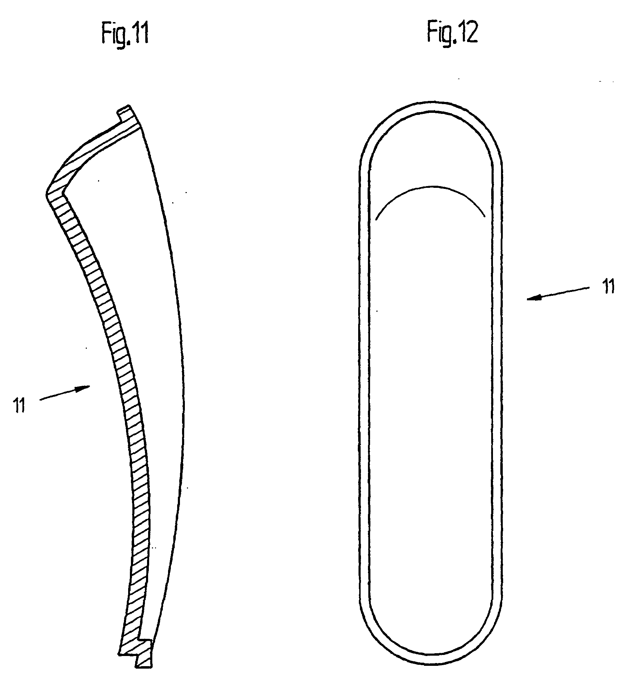

Die in Fig. 1 bis 12 der Zeichnung dargestellte Wasserausflußarmatur ist in einem Gehäuse 1 angeordnet und über eine Schlauchleitung 61, die in einem Rohrbogen 60 axial verschiebbar angeordnet ist, mit Druckwasser versorgbar. Der Rohrbogen 60 ist an seinem anderen Endbereich an einem Misch- und Absperrventil 6 drehbar gehalten, wobei das Misch- und Absperrventil 6 an einem Spültisch 7 mit einem Spülbecken 70 befestigt ist. Die Schlauchleitung 61 ist hierbei durch das Misch- und Absperrventil 6 hindurchgeführt und unter dem Waschtisch 7 (in der Zeichnung nicht dargestellt) mit der Ausflußöffnung des Misch- und Absperrventils 6 verbunden. Mit einem Stellhebel 63 an dem Misch- und Absperrventil 6 kann in bekannter Weise in einem ersten Freiheitsgrad das Mischungsverhältnis des zufließenden Kalt- und Warmwassers und in einem zweiten Freiheitsgrad die Gesamtdurchflußmenge des Wassers eingestellt werden.

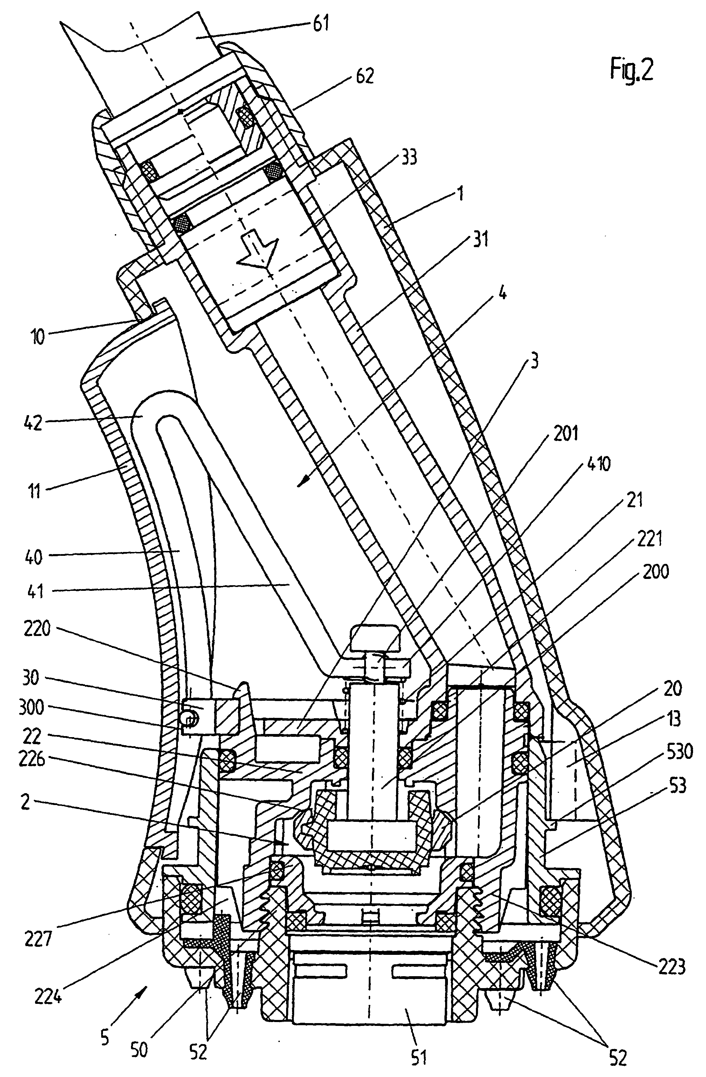

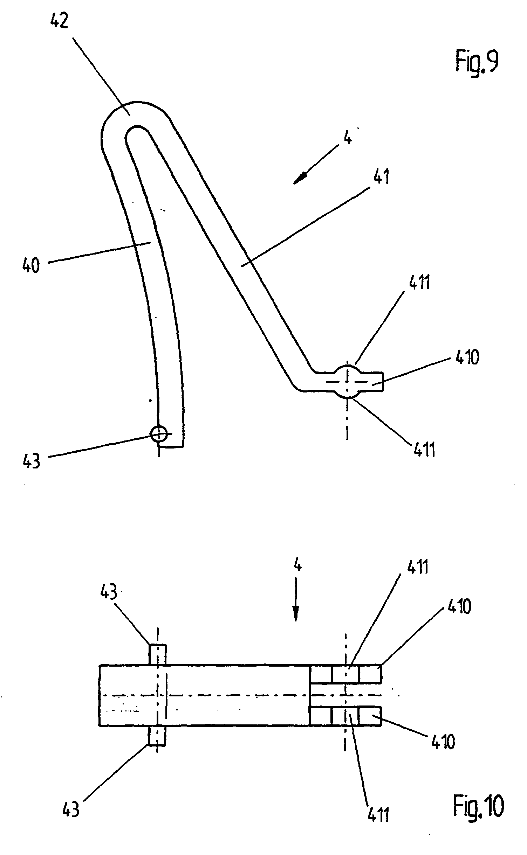

In dem Gehäuse 1 ist eine Bodenplatte 3 mit einem Zuflußrohr 31 angeordnet, wobei das Zuflußrohr 31 stromaufwärts aus dem Gehäuse 1 herausgeführt ist und ein Gewinde 310 für eine Überwurfmutter 62 für den Anschluß der Schlauchleitung 61 aufweist. Stromabwärts hinter der Schlauchleitung 61 ist in einem verdickten Bereich des Zuflußrohrs 31 ein Rückflußverhinderer 33 angeordnet, mit dem ein unzulässiges Rücksaugen von Wasser verhindert wird. Das Zuflußrohr 31 ist mit einem Winkel 312 von etwa 60° gegen die Bodenplatte 3 geneigt angeordnet. Am Außenrand der Bodenplatte 3 ist ein Lager 30 angeordnet, an dem ein bügelförmiger, aus Kunststoff im Spritzgießverfahren hergestellter Hebel 4 mit einem ersten Schenkel 40 drehbar angelenkt ist, während ein zweiter Schenkel 41 mit einem Umschaltventil 2 verbunden ist. Die beiden Schenkel 40,41 sind über einen Scheitel 42 miteinander verbunden. An dem Endbereich des Schenkels 40 sind zwei Lagerzapfen 43 angeformt, wie es insbesondere aus Fig. 2 und 10 zu entnehmen ist. Die Lagerzapfen 43 können über einen Radialschlitz 300 in dem Lager 30 radial eingesprengt werden, so daß der Hebel 4 um das Lager 30 schwenkbar angeordnet ist. In dem Gehäuse 1 ist ein Durchbruch 10 ausgebildet, aus dem der Schenkel 40 mit dem Scheitel 42 vorsteht. Der Durchbruch 10 ist hierbei mit einer entsprechend vorkragenden Membran 11 aus gummielastischem Werkstoff derart verschlossen, daß bei einer Betätigung des Hebels 4 die Membran 11 entsprechend verformt wird. Der Schenkel 40 ist dabei in der Form eines Abzugshahns gestaltet, so daß bei einem Umfassen des Gehäuses 1 der Hebel 4 bequem betätigbar ist.

An der Bodenplatte 3 ist das Umschaltventil 2 mit einem Ventilglied 20 mit Hilfe von drei Schnappnasen 220 befestigt. Die Schnappnasen 220 sind dabei an einem Gehäuse 22 ausgebildet, welches konzentrisch das Ventilglied 20 mit einer Stange 200 gedichtet führt. In der Rastposition der Schnappnasen 20 greift ein Stutzen 221 des Gehäuses 22 in eine Öffnung 311 des Zuflußrohres 31 gedichtet ein, von dem das zufließende Wasser in das Gehäuse in einen Zentralbereich eingeführt wird, in dem es in Abhängigkeit von der Stellung des Ventilglieds 20 entweder zu einem Wasserauslaßmundstück 51 oder zu konzentrisch um das Wasserauslaßmundstück 51 angeordneten Brausestrahlbildnern 52 geleitet wird. Die Stange 200 des Ventilglieds 20 ist dabei aus dem Gehäuse 22 durch die Bodenplatte 3 gedichtet hindurchgeführt und trägt am äußeren Ende eine Einschnürung 201. In dieser Einschnürung 201 ist der Schenkel 41 mit abgewinkelten gabelartig angeordneten Klauen 410 eingefügt, wobei zylindrische Gleitflächen 411 der Klauen 410 an den Stirnseiten der Einschnürung 201 anliegen. Zwischen einer Stirnseite der Klauen 410 und einer Aufnahme 32 in der Bodenplatte 3 ist eine Feder 21 angeordnet, mit der das Ventilglied 20 in eine bevorzugte Ausflußstellung, wie es in Fig. 2 der Zeichnung dargestellt ist, gedrückt wird. Koaxial zum Ventilglied 20 ist an dem Gehäuse 22 ein Gewindestutzen 223 angeformt, an dem ein Abschlußkörper 5 mit einem Gewindeansatz 50 befestigt ist. In dem Abschlußkörper 5 ist zentral das Wasserauslaßmundstück 51 und konzentrisch hierzu sind in zwei Reihen die Brausestrahlbildner 52 angeordnet. Auf dem Abschlußkörper 5 ist ein hülsenförmiger Außenkragen 53 angeordnet, der einerseits zum Abschlußkörper 5 und andererseits zum Gehäuse 22 mit Dichtringen gedichtet ist, so daß zwischen dem Gehäuse 22 und dem Abschlußkörper 5 ein Ringkanal 224 gebildet ist, über den die einzelnen Brausestrahlbildner 52 mit Wasser versorgt werden. Zu diesem Zweck sind oberhalb des Ventilglieds 20 in dem Gehäuse 22 Schlitze 225 zum Überströmen des zufließenden Wassers ausgebildet. Das Ventilglied 20 ist dabei zwischen zwei gegenüberliegenden ringförmigen Ventilsitzen 226 und 227 axial verschiebbar in dem Gehäuse 22 angeordnet, wobei das zuströmende Druckwasser seitlich zwischen den beiden Ventilsitzen 226,227 einströmt. Zur Einbringung des Ventilglieds 20 in das Gehäuse 22 ist der eine Ventilsitz 227 als lösbare Hülse in dem Gehäuse 22 ausgebildet.
Das Gehäuse 1 ist dabei so ausgebildet, daß es sich in Fließrichtung des Wassers stetig im Querschnitt vergrößert, wobei der Anfangsquerschnitt geringfügig größer als der Rohrdurchmesser des Rohrbogens 60 ist, während der stromabwärts gelegene Endbereich den Außenumfang des Abschlußkörpers 5 umschließt. Hierbei weist das Gehäuse 1 etwa die gleiche Krümmung wie der Rohrbogen 61 auf, wobei der Hebel 4,40 an der inneren Bogenseite des bogenförmigen Gehäuses 1 vorsteht. Zur Halterung des Gehäuses 1 auf dem Umschaltventil 2 ist dieses mit einer Rippe 13 versehen, die in der Stecklage an einem Ringbund 530 des Außenkragens 53 anliegt. Zur weiteren Sicherung in der Stecklage ist das Gehäuse 1 am stromaufwärts gelegenen Endbereich von der Überwurfmutter 62 gegen den Bund 530 gedrückt.

Die vorstehend beschriebene Wasserausflußarmatur hat folgende Funktionsweise:
In der in Fig. 1 der Zeichnung beschriebenen Stellung ist das Gehäuse 2 unmittelbar an dem Rohrbogen 60 angelagert, wobei die Überwurfmutter 62 in das Rohr eingreift und die Position der Wasserausflußarmatur zum Rohrbogen 60 bestimmt. In dieser Stellung bildet die Wasserausflußarmatur mit dem Rohrbogen einen stationären schwenkbaren Wasserauslaufarm des Misch- und Absperrventils 6. In dieser Stellung drückt die Feder 21 das Ventilglied 20 gegen den Ventilsitz 226, so daß das zufließende Wasser zentral dem Wasserauslaßmundstück 51 zugeführt wird, in dem ein gebündelter Wasserstrahl erzeugt und in das Spülbecken 70 gerichtet abgegeben wird.
Wird dagegen eine mobile Wasserbrause benötigt, so kann der Benutzer das Gehäuse 1 umgreifen und die Wasserausflußarmatur mit der Schlauchleitung 61 aus dem Rohrbogen 60 herausziehen. Wird hierbei anstatt eines Einzelstrahls eine Vielzahl von Brausestrahlen benötigt, so kann dieses durch eine Krafteinleitung auf die abzugshahnartig ausgebildete Membran 11 bewerkstelligt werden, wodurch der Hebel 4 entsprechend ausgelenkt wird, so daß entgegen der Kraft der Feder 21 das Ventilglied 20 auf den Ventilsitz 227 bewegt und nunmehr der Wasseraustritt durch die Schlitze 225 in den Ringkanal 224 und zu den einzelnen Strahlbildnern 52 freigegeben wird, während der Zutritt zu dem Wasserauslaßmundstück 51 abgesperrt wird. Werden die Brausestrahlen nicht mehr benötigt, wird nach einer Verringerung der Krafteinleitung in den Hebel 4 das Ventilglied 20 von der Feder 21 wieder an den Ventilsitz 226 zurückgeführt - in die Stellung gemäß Fig. 2 -und der Wasserweg zum Wasserauslaßmundstück 51 wieder freigegeben.
Der Umfang des Gehäuses 2 ist hierbei so dimensioniert, daß ein Benutzer das Gehäuse 1 gut umfassen kann, wobei zweckmäßig die Länge des Gehäuses 1 etwa dem zweifachen Durchmesser des Abschlußkörpers 5 entspricht.

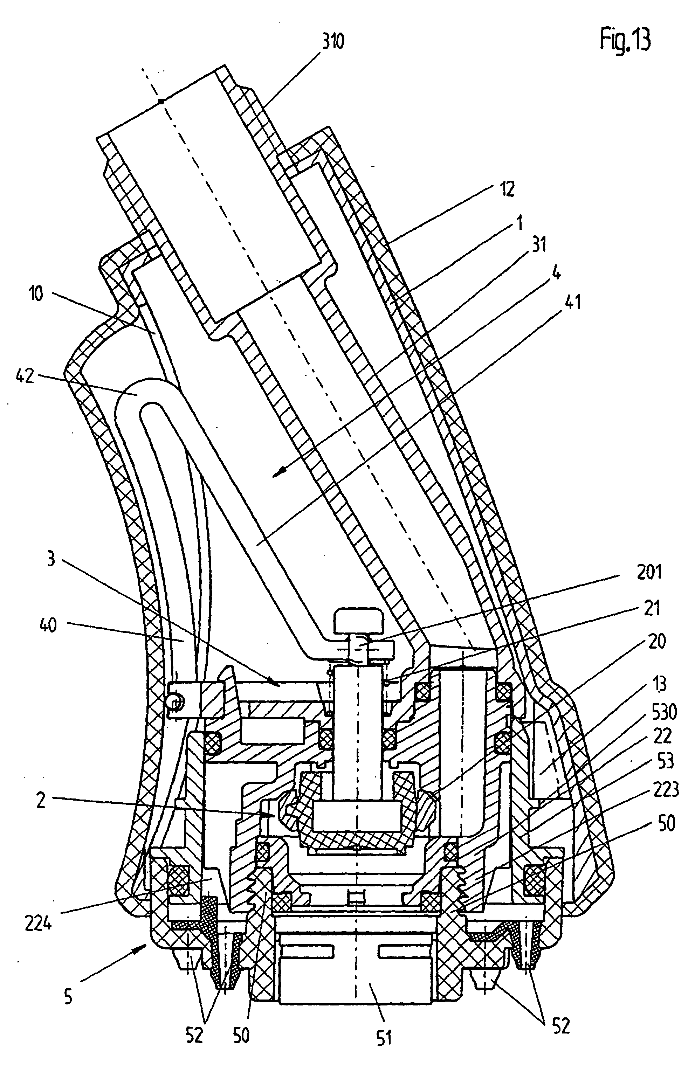

Das in Fig. 13 dargestellte Ausführungsbeispiel unterscheidet sich zu dem vorstehend beschriebenen im wesentlichen dadurch, daß das Gehäuse 1 mit einem gummielastischen Überzug 12 versehen ist, wobei die Membran 11 einstückig mit dem Überzug 12 ausgebildet ist. Durch den gummielastischen Überzug 12 kann die Griffigkeit und Handhabbarkeit der Wasserausflußarmatur erheblich erhöht werden.

## Patentansprüche

1. Wasserausflußarmatur mit einer in einem Rohrbogen (60) verschiebbar geführte Schlauchleitung (61) zu einem Misch- und/oder Absperrventil sowie mit verschiedenen Wasserstrahlbildnern, wobei mit einem von einem Betätigungsglied stellbaren Umschaltventil (2) wahlweise einem Wasserauslaßmundstück (51) oder Brausestrahlbildnern (52) Druckwasser zuführbar ist, **dadurch gekennzeichnet, daß** als Betätigungsglied ein Hebel (4) vorgesehen ist, der mit einem Endbereich mit einem stromaufwärts vor dem Wasserauslaßmundstück (51) angeordneten Ventilglied (20) des Umschaltventils (2) verbunden und außerdem mit einer Drehachse an einem Gehäuseteil gelagert ist, wobei ein Bereich des Hebels (4,40) aus einem die Wasserausflußarmatur umgebenden Gehäuse (1) als Betätigungsgriff vorsteht, und das Gehäuse (1) mit dem Betätigungsgriff im Querschnitt so dimensioniert ist, daß es vom Benutzer mit einer Hand umfaßbar ist.

2. Wasserausflußarmatur nach Anspruch 1, **dadurch gekennzeichnet, daß** der Hebel (4) bügelförmig ausgebildet ist, wobei ein erster Schenkel (40) an einem Lager (30) drehbar gehalten, ein zweiter Schenkel (41) mit einem Ventilglied (20) verbunden ist, während der Scheitel (42) der Schenkel (40,41) aus dem Gehäuse (1) vorsteht und zur Betätigung des Umschaltventils (2) dient.

3. Wasserausflußarmatur nach Anspruch 1 oder 2, **dadurch gekennzeichnet, daß** das Ventilglied (2) von einer Feder (21) in eine bevorzugte Ventilstellung, vorzugsweise in die Ausflußstellung zum Wasserauslaßmundstück (51), gedrückt ist, wobei mit entsprechender Krafteinleitung in den vorstehenden Hebelarm das Ventilglied (20) von dem Benutzer in die andere Ventilstellung bringbar ist, aus der es nach einer Verringerung der Krafteinleitung durch die Federkraft in die Ausgangsstellung zurückgeführt wird.

4. Wasserausflußarmatur nach Anspruch 2 oder 3, **dadurch gekennzeichnet, daß** der erste Schenkel (40) kreisbogenförmig nach Art eines Abzugshahns gestaltet ist.

5. Wasserausflußarmatur nach wenigstens einem der Ansprüche 2 bis 4, **dadurch gekennzeichnet, daß** das Lager (30) an einer Bodenplatte (3) ausgebildet ist, an der ein Zuflußrohr (31) angeformt ist, das am stromaufwärts gelegenen Ende ein Gewinde (310) für den Anschluß der Schlauchleitung (61) trägt und das stromabwärts eine Öffnung (311) für den Anschluß des Umschaltventils (2) hat.

6. Wasserausflußarmatur nach Anspruch 5, **dadurch gekennzeichnet, daß** das Umschaltventil (2) mit seinem Gehäuse (22) mittels Schnappnasen (220) an der Bodenplatte (3) befestigt ist, wobei ein vorstehender Stutzen (221) von der Öffnung (311) in der Stecklage gedichtet aufgenommen ist.

7. Wasserausflußarmatur nach Anspruch 6, **dadurch gekennzeichnet, daß** an dem Gehäuse (22) koaxial zum Ventilglied (20) ein Gewindestutzen (223) ausgebildet ist, an dem ein Abschlußkörper (5) mit einem Gewindeansatz (50) befestigt ist, wobei das Wasserauslaßmundstück (51) zentral, die Brausestrahlbildner (52) in einem oder mehreren konzentrischen Ring(en) in dem Abschlußkörper (5) angeordnet sind, und der Abschlußkörper (5) mit einem Außenkragen (53) einen Ringkanal (224) begrenzt, der einerseits über das Umschaltventil (2) mit dem Zuflußrohr (31) und andererseits mit den Brausestrahlbildnern (52) verbunden ist.

8. Wasserausflußarmatur nach wenigstens einem der Ansprüche 5 bis 7, **dadurch gekennzeichnet, daß** das Ventilglied (20) mit einer Stange (200) gedichtet aus dem Gehäuse (22) und durch die Bodenplatte (3) geführt ist, wobei am vorstehenden Endbereich der Stange (200) eine Einschnürung (201) ausgebildet ist, in die der Endbereich des zweiten Schenkels (41) mit gabelartigen Klauen (410) einfaßt, die an den Stirnflächen der Einschnürung (201) mit zylindrischen Gleitflächen (411) anliegen, und zwischen dem Endbereich des Schenkels (41) einerseits und einer Aufnahme (32) in der Bodenplatte (3) andererseits die Feder (21) für das Umschaltventil (2) abgestützt ist.

9. Wasserausflußarmatur nach wenigstens einem der Ansprüche 1 bis 8, **dadurch gekennzeichnet, daß** ein radialer Durchbruch (10) im Gehäuse (1) für den Hebel (4,40) von einer vorstehenden verformbaren gummielastischen Membran (11) verschlossen ist.

10. Wasserausflußarmatur nach wenigstens einem der.Ansprüche 1 bis 8, **dadurch gekennzeichnet, daß** das gesamte Gehäuse (1) an der Außenseite mit einem gummielastischen Überzug (12) versehen ist, wobei der Überzug (12) im Bereich eines Durchbruchs (10) für den Hebel (4,40) erhaben ausgebildet und bei der Betätigung verformbar ist.

11. Wasserausflußarmatur nach wenigstens einem der Ansprüche 5 bis 10, **dadurch gekennzeichnet, daß** das Zuflußrohr (31) mit einem Winkel (312) von etwa 60° zur Bodenplatte (3) geneigt angeordnet ist.

12. Wasserausflußarmatur nach Anspruch 11, **dadurch gekennzeichnet, daß** das Gehäuse (1), vom Abschlußkörper (5) beginnend, in Gegenstromrichtung verjüngt ausgebildet ist, so daß ein harmonischer Übergang zu dem auf dem Misch- und Absperrventil (6) gehalterten Rohrbogen (60) für die Schlauchleitung (61) gebildet ist.

13. Wasserausflußarmatur nach Anspruch 11 oder 12, **dadurch gekennzeichnet, daß** das Gehäuse (1) zur Axialsicherung einerseits mit einer Rippe (13) an einem Ringbund (530) am Außenkragen (53) und andererseits stirnseitig an einer Überwurfmutter (62) der Schlauchleitung (61) anliegt.

14. Wasserausflußarmatur nach wenigstens einem der Ansprüche 2 bis 13, **dadurch gekennzeichnet, daß** der Hebel (4) einstückig aus Kunststoff im Spritzgießverfahren hergestellt ist und radial vorstehende Lagerzapfen (43) trägt, wobei das Lager (30) einen Radialschlitz (300) aufweist, durch den der Hebel (4) mit den Lagerzapfen (43) in das Lager (30) einsprengbar ist.

15. Wasserausflußarmatur nach Anspruch 13 oder 14, **dadurch gekennzeichnet, daß** die Überwurfmutter (62) im vorstehenden Endbereich des Rohrbogens (60) begrenzt einschiebbar und in der Stecklage geführt ist.

16. Wasserausflußarmatur nach wenigstens einem der Ansprüche 1 bis 15, **dadurch gekennzeichnet, daß** die Länge des Gehäuses (1) etwa dem zweifachen des größten Durchmessers des Gehäuses (1) entspricht.

17. Wasserausflußventil nach wenigstens einem der Ansprüche 12 bis 16, **dadurch gekennzeichnet, daß** das Gehäuse (1) etwa die gleiche Krümmung wie der Rohrbogen (60) aufweist und das stromaufwärts gelegene Ende eine geringfügig zum Rohrdurchmesser vergrößerten Außendurchmesser hat, der in Fließrichtung des Wassers zunehmend auf den Durchmesser des Abschlußkörpers (5) vergrößert ist, wobei der Hebel (4,40) an der inneren Bogenseite des bogenförmigen Gehäuses (1) vorsteht.

## Claims

1. Water discharge fitting having a hose assembly (61) slidably guided in a curved pipe (60) to a mixing and/or shut-off valve and having different water jet formers, wherein water under pressure is conveyable either to a water outlet mouth piece (51) or to shower jet formers (52) using a change-over valve (2) adjustable by means of an operating member, **characterised in that** as operating member a lever (4) is provided, which with one end region is connected to a valve member (20) of the change-over valve (2) arranged upstream of the water outlet mouthpiece (51) and is also mounted with an axis of rotation on a housing part, one region of the lever (4,40) projecting as operating handle from a housing (1) enclosing the water discharge fitting, and the cross-section of the housing (1) together with the operating handle being dimensioned so that a user can grip it with one hand.

2. Water discharge fitting according to claim 1, **characterised in that** the lever (4) is in the form of a U-shaped member, a first arm (40) being rotatably held at a bearing (30), a second arm (41) being connected to a valve member (20), whilst the apex (42) of the arms (40, 41) protrudes from the housing (10) and serves for operation of the change-over valve (2).

3. Water discharge fitting according to claim 1 or 2, **characterised in that** the valve member (2) is pressed by a spring (21) into a preferred valve position, preferably into the position of discharge to the water outlet mouthpiece (51), wherein the user is able by suitable application of force to the protruding lever arm to bring the valve member (20) into the other valve position, from which it is returned by the spring force into the initial position following a decrease in the applied force.

4. Water discharge fitting according to claim 2 or 3, **characterised in that** the first arm (40) is arcuate in the manner of a trigger tap.

5. Water discharge fitting according to at least one of claims 2 to 4, **characterised in that** the bearing (30) is formed on a base plate (3) with which there is integrally formed a supply pipe (31), which at its end located upstream carries a thread (310) for the attachment of the hose assembly (61) and downstream has an opening (311) for the attachment of the change-over valve (2).

6. Water discharge fitting according to claim 5, **characterised in that** the change-over valve (2) is secured with its housing (22) to the base plate (3) by means of snap-on projections (220), a protruding connector (221) being received in sealed manner by the opening (311) in the mounted position.

7. Water discharge fitting according to claim 6, **characterised in that** coaxially with the valve member (20) on the housing (22) there is formed a threaded connector (223), to which a closure member (5) is secured by means of a threaded shoulder (50), the water outlet mouthpiece (51) being arranged centrally, the shower jet formers (52) being arranged in one or more concentric ring(s) in the closure member (5), and the closure member (5) defining with an outer collar (53) an annular channel (224) which is connected at one side via the change-over valve (2) to the supply pipe (31) and at the other side to the shower jet formers (52).

8. Water discharge fitting according to at least one of claims 5 to 7, **characterised in that** the valve member (20) is provided with a rod (200) guided in sealed manner out of the housing (22) and through the base plate (3), there being formed at the protruding end region of the rod (200) a neck (201) into which the end region of the second arm (41) engages with fork-like claws (410) that abut the end faces of the neck (201) with cylindrical sliding contact surfaces, and the spring (21) for the change-over valve (2) is supported between the end region of the arm (41) at one end and a seat (32) in the base plate (3) at the other end.

9. Water discharge fitting according to at least one of claims 1 to 8, **characterised in that** a radial opening (10) in the housing (1) for the lever (4, 40) is closed by a protruding, deformable elastomeric membrane (11).

10. Water discharge fitting according to at least one of claims 1 to 8, **characterised in that** the entire housing (1) is provided on the outside with an elastomeric covering (12), the covering (12) standing proud in the region of an opening (10) for the lever (4, 40) and being deformable on operation thereof.

11. Water discharge fitting according to at least one of claims 5 to 10, **characterised in that** the supply pipe (31) is arranged inclined at an angle (312) of about 60° to the base plate (3).

12. Water discharge fitting according to claim 11, **characterised in that** commencing from the closure member (5) the housing (1) is tapered in the direction opposite to the flow so that a co-ordinated transition to the curved pipe (60) for the hose assembly (61) mounted on the mixing and shut-off valve (6) is formed.

13. Water discharge fitting according to claim 11 or 12, **characterised in that**, to secure it axially, the housing (1) abuts at one end with a rib (13) against an annular shoulder (530) on the outer collar (53) and at the other end with its front face against a cap nut (62) of the hose assembly (61).

14. Water discharge fitting according to at least one of claims 2 to 13, **characterised in that** the lever (4) is manufactured in one piece from plastics material by injection moulding and carries radially protruding bearing journals (43), the bearing (30) having a radial slot (300) through which the lever (4) with the bearing journals (43) can be snapped into the bearing (30).

15. Water discharge fitting according to claim 13 or 14, **characterised in that** in the protruding end region of the curved pipe (60) the cap nut (62) is capable of being pushed in with limited displacement and is guided in the mounted position.

16. Water discharge fitting according to at least one of claims 1 to 15, **characterised in that** the length of the housing (1) corresponds approximately to twice the largest diameter of the housing (1).

17. Water discharge fitting according to at least one of claims 12 to 16, **characterised in that** the housing (1) has approximately the same curvature as the curved pipe (60) and relative to the pipe diameter its end located upstream has a slightly enlarged external diameter that enlarges increasingly, in the direction of flow of the water, to the diameter of the closure member (5), the lever (4, 40) protruding on the inner curved side of the curved housing (1).

## Revendications

1. Robinetterie d'eau avec une conduite en tuyau souple (61) guidée coulissante dans un coude (60) vers une soupape de mélange et/ou de fermeture ainsi que plusieurs éjecteurs d'eau dans lequel une soupape de commutation (2) réglable au moyen d'un organe d'actionnement permet d'amener de l'eau sous pression vers au choix un bec de sortie d'eau (51) ou des éjecteurs de douche (52),
**caractérisée en ce qu'**
on prévoit un levier (4) comme organe d'actionnement dont une extrémité est reliée à un organe de soupape (20) de la soupape de commutation (2) disposé en amont du courant avant la pièce de bec de sortie d'eau (51) et, d'autre part, positionné à l'aide d'un axe de rotation à une partie de boîtier, une zone du levier (4, 40) venant en saillie en dehors du boîtier (1) entourant la robinetterie sous forme de poignée d'actionnement, et le boîtier (1) avec la poignée d'actionnement est dimensionné en section de façon à être entouré d'une seule main par l'utilisateur.

2. Robinetterie selon la revendication 1,
**caractérisée en ce que**
le levier (4) est réalisé coudé, une première branche (40) étant maintenue rotative à un palier (30), une seconde branche (41) étant reliée avec un organe de soupape (20) alors que le sommet (42) des branches (40, 41) vient en saillie à l'extérieur du boîtier (1) et sert à l'actionnement de la soupape de commutation (2).

3. Robinetterie selon la revendication 1 ou 2,
**caractérisée en ce que**
l'organe de soupape (2) est poussé par un ressort (21) dans une position de soupape prédéterminée, de préférence dans la position d'ouverture vers le bec de sortie (51) alors que par la transmission d'une force correspondante au bras de levier en saillie, l'organe de soupape (20) peut être amené par l'utilisateur dans l'autre position à partir de laquelle, après une diminution de la transmission de force, il est ramené par la force de ressort dans la position de fin de course.

4. Robinetterie selon la revendication 2 ou 3,
**caractérisée en ce que**
la première branche (40) est réalisée cintrée selon la forme d'un robinet de prélèvement.

5. Robinetterie selon au moins une des revendications 2 à 3,
**caractérisée en ce que**
le palier (30) est réalisé sur une plaque de fond (3) sur laquelle est formé un tuyau d'arrivée (31) qui porte à son extrémité amont un filetage (310) pour le branchement de la canalisation en tuyau souple (61) et en aval une ouverture (311) pour le branchement de la soupape de commutation (2).

6. Robinetterie selon la revendication 5,
**caractérisée en ce que**
la soupape de commutation (2) est fixée avec son boîtier (22) au moyen de becs d'enclipsage (220) sur la plaque de fond (3), un manchon en saillie (221) étant reçu par l'ouverture (311) de manière étanche dans la position enfichée.

7. Robinetterie selon la revendication 6,
**caractérisée en ce qu'**
une tubulure filetée (223) est réalisée sur le boîtier (22) coaxialement à l'organe de soupape 20), tubulure sur laquelle est fixée un embout (5) avec un embout fileté (50), la pièce de bec de sortie (51) étant disposée centrale, les éjecteurs de douche (52) étant disposés selon un ou plusieurs anneau(x) dans l'embout (5) et l'embout (5) délimite avec un collet extérieur (53) un canal annulaire (224) qui est relié, d'une part, avec le tuyau d'arrivée (31) au moyen de la soupape de commutation (2), et, d'autre part, avec les éjecteurs de douche (52).

8. Robinetterie selon au moins une des revendications 5 à 7,
**caractérisée en ce que**
l'organe de soupape (20) est guidé avec une barre (200) de manière étanche à travers le boîtier (22) et la plaque de fond (3), un étranglement (201) étant réalisé à l'extrémité en saillie de la barre (200), étranglement dans lequel la zone d'extrémité de la seconde branche (41) vient en prise avec des pattes (410) en forme de fourchettes qui reposent à la face frontale de l'étranglement (201) avec des surfaces de guidage cylindriques (411) et le ressort (21) pour la soupape de commutation (2) s'appuie, d'une part, sur l'extrémité de la branche (41) et, d'autre part, sur un logement (32) dans la plaque de fond (3).

9. Robinetterie selon au moins une des revendications 1 à 8,
**caractérisée en ce qu'**
un passage radial (10) dans le boîtier (1) pour le levier (4, 40) est fermé par une membrane (11) déformable en matériau élastique en saillie.

10. Robinetterie selon au moins une des revendications 1 à 8,
**caractérisée en ce que**
l'ensemble du boîtier (1) est prévu avec sa surface extérieure recouverte d'une enveloppe (12) en caoutchouc élastique, l'enveloppe (12) est réalisée en relief dans la zone d'un passage (10) pour le levier (4, 40) par une membrane élastique en caoutchouc.

11. Robinetterie selon au moins une des revendications 5 à 10,
**caractérisée en ce que**
le tuyau d'alimentation (31) est disposé coudé avec un angle (312) d'environ 60° par rapport à la plaque de fond (3).

12. Robinetterie selon au moins une des revendications 11,
**caractérisée en ce que**
le boîtier (1) se réduit à partir de l'extrémité (5) dans la direction inverse au courant de sorte que l'on ait un passage harmonieux vers le coude de tuyau (60) maintenu sur la soupape de mélange et de fermeture (6) pour la canalisation en tuyau souple (61).

13. Robinetterie selon l'une des revendications 11 à 12,
**caractérisée en ce que**
le boîtier (1) repose pour la fixation axiale, d'une part, avec une rainure (13) contre une collerette annulaire (530) sur le collet extérieur (53) et, d'autre part, du côté frontal sur un écrou raccord (62) de la canalisation souple (61).

14. Robinetterie selon au moins une des revendications 2 à 13,
**caractérisée en ce que**
le levier (4) est réalisé en une seule pièce en matériau plastique injecté et porte des bouchons de palier (43) en saillie radialement, le palier (30) présentant une fente radiale (300) à travers laquelle le levier (4) peut être enfoncé.

15. Robinetterie selon la revendications 13 ou 14,
**caractérisée en ce que**
l'écrou raccord (62) est poussé dans la zone d'extrémité en saillie du coude (60) de manière limitée et amené en position d'enfichage.

16. Robinetterie selon au moins une des revendications 1 à 15,
**caractérisée en ce que**
la longueur du boîtier (1) correspond sensiblement à deux fois le plus grand diamètre du boîtier (1).

17. Robinetterie selon au moins une des revendications 12 à 16,
**caractérisée en ce que**
le boîtier (1) a sensiblement la même courbure que le tuyau coudé (60) et l'extrémité amont a un diamètre extérieur faiblement agrandi par rapport au diamètre du tuyau qui augmente dans la direction d'écoulement de l'eau vers le diamètre du manchon (5), le levier (4, 40) venant en saillie du côté intérieur du coude du boîtier coudé (1).
